# EUROPÄISCHE PATENTSCHRIFT

(11) **EP 1 158 857 B1**
(45) Veröffentlichungstag und Bekanntmachung des Hinweises auf die Patenterteilung: **23.04.2003**
(21) Anmeldenummer: 00920450.4
(22) Anmeldetag: 28.02.2000
(51) Int. Cl.: A01N 43/80, A01N 43/78

(54) **HERBIZIDE MISCHUNG, ENTHALTEND EIN 3-HETEROCYCLYL-SUBSTITUIERTES BENZOYLDERIVAT UND EIN ADJUVANT**
HERBICIDAL MIXTURE CONTAINING A 3-HETEROCYCLYL-SUBSTITUTED BENZOYL DERIVATIVE AND AN ADJUVANT
MELANGE HERBICIDE CONTENANT UN DERIVE DE BENZOYLE A SUBSTITUTION 3-HETEROCYCLYLE

(30) Priorität: 05.03.1999 DE 19909833
(43) Veröffentlichungstag der Anmeldung: 05.12.2001
(73) Patentinhaber: BASF AKTIENGESELLSCHAFT, 67056 Ludwigshafen (DE)
(72) Erfinder: BRATZ, Matthias, D-67117 Limburgerhof (DE); BERGHAUS, Rainer, D-67346 Speyer (DE); OTTEN, Martina, D-67069 Ludwigshafen (DE); SIEVERNICH, Bernd, D-67459 Böhl-Iggelheim (DE); KIBLER, Elmar, D-67454 Hassloch (DE); VANTIEGHEM, Herve, D-76297 Stutensee (DE)
(86) Internationale Anmeldenummer: EP0001641
(87) Internationale Veröffentlichungsnummer: WO00053014

(56) Entgegenhaltungen:
- EP-A- 0 356 812
- WO-A-96/26206
- US-A- 4 834 908

## Beschreibung

Die vorliegende Erfindung betrifft eine herbizide Mischung mit synergistischer Wirkung aus einem 3-heterocyclyl-substituierten Benzoylderivat und einem Adjuvant.

3-Heterocyclyl-substituierte Benzoylderivate sind bekannt und werden beispielsweise in WO 96/26206, WO 97/41116, WO 97/41117 und WO 97/41118 beschrieben.

Aus der EP-B-0584 227 sind herbizide Zusammensetzungen aus substituierten Cyclohexandionen und Stickstoffdüngern bekannt.

Aus der deutschen Anmeldung DE 19825588 sind herbizide Mischungen auf der Basis eines 3-heterocyclyl-substituierten Benzoylderivates, eines stickstoffhaltigen Düngers und eines Adjuvants bekannt.

Aufgabe der vorliegenden Erfindung war es, eine herbizide Mischung zur Verfügung zu stellen, die 3-heterocyclyl-substituierte Benzoylderivate enthalten und deren herbizide Wirkung erhöht ist gegenüber der Wirkung des reinen Wirkstoffs.

Diese Aufgabe konnte gelöst werden mit einer herbiziden Mischung, enthaltend
a) 0,5 bis 90 Gew.-% eines 3-heterocyclyl-substituierten Benzoylderivates der Formel I 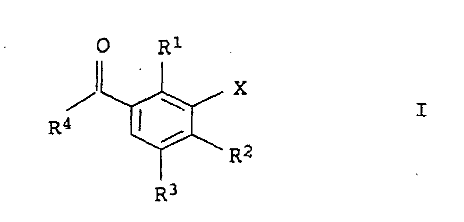 in der die Variablen folgende Bedeutung haben:
   - R¹: Chlor, Methyl;
   - R²: Methylsulfonyl;
   - R³: Wasserstoff;
   - X: 4,5-Dihydroisoxazolyl;
   - R⁴: ein in 4-Stellung verknüpftes Pyrazol der Formel II 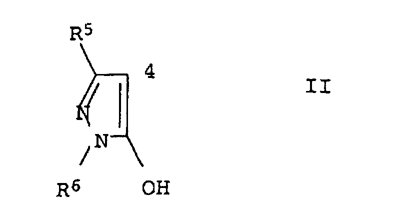 wobei
   - R⁵: Wasserstoff;
   - R⁶: Methyl;
   bedeuten, oder deren umweltverträglichen Salze;
b) 10 bis 99,5 Gew.-% eines Adjuvants enthaltend
   i) einen C₁-C₅-Alkylester einer 5 bis 22 Kohlenstoff-Atome enthaltenden Carbonsäure;
   ii) eine C₁₀-C₂₀-Carbonsäure;
   iii) einen partiellen Phosphorsäureester oder einen partiellen Schwefelsäureester eines monohydroxyfunktionellen Polyalkylethers und
   iv) ggf. einen Alkylpolyoxyalkylenpolyether
in einer synergetisch wirksamen Menge.

Die erfindungsgemäße herbizide Mischung zeigt eine synergistische Wirkung und ist für diejenigen Kulturpflanzen selektiv, für welche die Einzelverbindungen selbst auch verträglich sind.

Ganz besonders bervorzugt sind die Verbindungen

4-[2-Chlor-3-(4,5-dihydroisoxazol-3-yl)-4-methylsulfonyl-benzoyl]-1-methyl-5-hydroxy-1H-pyrazol, 4-[2-Methyl-3-(4,5-dihydroisoxazol-3-yl)-4-methylsulfonyl-benzoyl]-1-methyl-5-hydroxy-lH-pyrazol,
und/oder deren umweltverträglichen Salze.

Geeignete umweltverträgliche Salze sind Salze von beispielsweise Alkalimetallen, Erdalkalimetallen, Ammoniak oder Aminen.

Geeignete Adjuvants b) enthalten eine Mischung aus
i) einem C₁-C₅-Alkylesters einer 5 bis 22 Kohlenstoff-Atome enthaltenden Carbonsäure;
ii) einer C₁₀-C₂₀-Carbonsäure;
iii) einem partiellen Phosphorsäureester oder eines partiellen Schwefelsäureester eines monohydroxyfunktionellen Polyalkylethers und
iv) ggf. einem Alkylpolyoxyalkylenpolyether.

Diese Adjuvants sind beispielsweise in der US 4,834,908, EP 356 812 und EP 553 074 beschrieben.

Geeignete C₁-C₅-Alkylester einer 5 bis 22 Kohlenstoff-Atome enthaltenden Carbonsäure (i) sind Alkylester einer Carbonsäure, wobei das zur Veresterung verwendete Alkanol 1-5 Kohlenstoff-Atome enthält wie beispielsweise Methyloleat, -palmitat, -myristat, -linolenat, -laurat, -stearat, -pelargonat, Ethyloleat, -palmitat, -mristat, -linolenat, -linoleat, -laurat, -stearat, -pelargonat, n-Propyloleat, -palmitat, -myristat, -linolenat, -linoleat, -laurat, -stearat, -pelargonat, i-Propyloleat, -palmitat, -myristat, -linolenat, -linoleat, -laurat, -stearat, -pelargonat, n-Butyloleat, -palmitat, -myristat, -linolenat, -linoleat, -laurat, -stearat, -pelargonat, i-Butyloleat, -palmitat, -myristat, -linolenat, -linoleat, -laurat, -stearat, -pelargonat, n-Pentyloleat, -palmitat, -myristat, -linolenat, -linoleat, - laurat, -stearat, -pelargonat. Bevorzugt sind Methyloleat, Methylpalmitat, Ethyl-oleat und deren Gemische.

Geeignete C₁₀-C₂₀-Carbonsäuren (ii) umfassen gesättigte sowie einfache und mehrfach ungesättigte Carbonsäuren wie beispielsweise Ölsäure, Palmitinsäure, Myristinsäure, Linolsäure, Linolensäure, Laurinsäure und Stearinsäure. Bevorzugt ist Ölsäure.

Geeignete partielle Phosphorsäureester und partielle Schwefelsäureester eines monohydroxyfunktionellen Polyalkylenethers (iii) sind solche, deren Polyalkylenether-Reste durch Oxalkylierung von langkettigen Alkoholen wie C₁₀-C₂₀-Alkanolen, bevorzugt C₁₀-C₁₆-Alkanolen mit Alkylenoxiden wie Ethylenoxid, Propylenoxid oder Butylenoxid hergestellt werden können. Die Alkylenoxide können ein Gemisch, aber auch nacheinander zur Herstellung von Block-Copolymeren eingesetzt werden.

Bevorzugt werden Polyalkylenether mit einer C₁₀-C₁₆-Alkylkette mit 10-15 mol Ethylenoxid- und 1-10, bevorzugt 2-6 mol Propylenoxid-Einheiten.

Bevorzugte Produkte sind Klearfac™ AA 270 der BASF Corporation und Lutensit® A-EP der BASF Aktiengesellschaft.

Gegebenenfalls können Alkylpolyoxyalkylenpolyether mitverwendet werden. Geeignet sind solche, die durch Oxalkylierung von C₁₀-C₂₅-Alkanolen mit Alkylenoxiden wie Ethylenoxid, Propylenoxid oder Butylenoxid hergestellt werden können.

Bevorzugt sind Alkylpolyoxyalkylenpolyether mit einer C₁₀-C₂₅-Alkylkette, bevorzugt C₁₂-C₂₀-Alkylkette mit einem EO/PO-Blockcopolymer wie beispielsweise
Antarox® BO, Rhodia
Emulsogen® V 2436, Clariant
Plurafac® LF, BASF AG
Dehypon® LS, Henkel
Dehypon® LT, Henkel
Synperionic® LF, ICI Speciality Chemicals.

Besonders bevorzugt ist Plurafac® LF 700, BASF AG.

Das Adjuvant b) enthält die Komponenten in folgenden Konzentrationen:
5 bis 90 % des C₁-C₅-Alkyl-C₅-C₂₂-alkanoates,
2 bis 40 % der C₁₀-C₂₀-Carbonsäure,
4 bis 40 % des partiellen Phosphorsäureesters oder des partiellen Schwefelsäureesters eines monohydroxyfunktionellen Polyalkylethers und
0 bis 75 % des Alkylpolyoxyalkylenpolyethers.

Bevorzugt sind:
5 bis 60 % des C₁-C₅-Alkyl-C₅-C₂₂-alkanoates,
2 bis 40 % der C₁₀-C₂₀-Carbonsäure,
5 bis 35 % des partiellen Phosphorsäureesters oder des partiellen Schwefelsäureesters eines monohydroxyfunktionellen Polyalkylethers und
0 bis 70 % des Alkylpolyoxyalkylenpolyethers.

Besonders bevorzugt sind:
5 bis 40 % des C₁-C₅-Alkyl-C₅-C₂₂-alkanoates,
2 bis 35 % der C₁₀-C₂₀-Carbonsäure,
5 bis 30 % des partiellen Phosphorsäureesters oder des partiellen Schwefelsäureesters eines monohydroxyfunktionellen Polyalkylethers und
0 bis 70 % des Alkylpolyoxyalkylenpolyethers.

Die erfindungsgemäße herbizide Mischung enthält die Komponenten a) und b) in folgenden Mengen:
0,5 bis 90 Gew.-% des 3-heterocyclyl-substituierten Benzoylderivates a);
10 bis 99,5 Gew.-% des Adjuvants b).

Bevorzugte Mengenverhältnisse sind:
1 bis 80 Gew.-% des 3-heterocyclyl-substituierten Benzoylderivates a);
20 bis 99 Gew.-% des Adjuvants b).

Hierbei ergänzen sich die Komponenten auf 100 Gew.-%.

Die einzelnen Komponenten a) und b) der erfindungsgemäßen herbiziden Mischung können zusammen oder einzeln formuliert und verpackt werden.

Der Landwirt verwendet die herbizide Mischung oder deren einzelne Komponenten für die Anwendung im Spritztank.

Dabei wird die herbizide Mischung mit Wasser verdünnt, wobei ggf. weitere Hilfs- und Zusatzmittel zugegeben werden. Der Landwirt kann aber auch die einzelnen Komponenten a) und b) der erfindungsgemäßen herbiziden Mischung selber im Spritztank mischen und ggf. weitere Hilfs- und Zusatzmittel zugeben (Tankmixverfahren).

Beim Tankmixverfahren werden die Komponenten a) und b) im Spritztank gemischt und mit Wasser auf die gewünschte Anwendungskonzentration gebracht.

Zur besseren Verarbeitung können weitere Hilfs- und Zusatzmittel zugegeben werden. Als Hilfs- und Zusatzmittel haben sich folgende Komponenten bewährt:
Lösungsmittel, Entschäumer, Puffersubstanzen, Verdicker, Spreitmittel, kompatibilitätsfördernde Mittel.
Beispiele und Marken für Adjuvants und Hilfs- und Zusatzmittel werden beschrieben in Farm Chemicals Handbook 1997; Meister Publishing 1997 S. C10 "adjuvant" oder 1998 Weed Control Manual S. 86.

Die erfindungsgemäße Mischung eignet sich als Herbizid. Die herbizide Mischung bekämpft Pflanzenwuchs auf Nichtkulturflächen sehr gut, besonders bei hohen Aufwandmengen. In Kulturen wie Weizen, Reis, Mais, Soja und Baumwolle wirkt sie gegen Unkräuter und Schadgräser, ohne die Kulturpflanzen nennenswert zu schädigen. Dieser Effekt tritt vor allem bei niedrigen Aufwandmengen auf.

In Abhängigkeit von der jeweiligen Applikationsmethode kann die herbizide Mischung noch in einer weiteren Zahl von Kulturpflanzen zur Beseitigung unerwünschter Pflanzen eingesetzt werden. In Betracht kommen beispielsweise folgende Kulturen:
Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus kann die herbizide Mischung auch in Kulturen, die durch Züchtung einschließlich gentechnischer Methoden gegen die Wirkung von Herbiziden tolerant sind, verwandt werden.

Die Applikation der herbiziden Mischung kann im Vorlauf- oder im Nachauflaufverfahren erfolgen. Ist die herbizide Mischung für gewisse Kulturpflanzen weniger verträglich, so können Ausbringungstechniken angewandt werden, bei welchen die herbizide Mischung mit Hilfe der Spritzgeräte so gespritzt werden, daß die Blätter der empfindlichen Kulturpflanzen nach Möglichkeit nicht getroffen werden, während die herbizide Mischung auf die Blätter darunter wachsender unerwünschter Pflanzen oder die unbedeckte Bodenfläche gelangen (post-directed, lay-by).

Die herbizide Mischung kann beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen herbiziden Mischung gewährleisten.

Als inerte Zusatzstoffe kommen im Wesentlichen in Betracht. Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphtahalin, alkylierte Naphtaline oder deren Derivate, alkylierte Benzole oder deren Derivate, Alkohole wie Methanol, Ethanol, Propanol, Butanol, Cyclohexanol, Ketone wie Cyclohexanon oder stark polare Lösungsmittel, z.B. Amine wie N-Methylpyrrolidon oder Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen kann die herbizide Mischung als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der herbiziden Mischung mit einem festen Trägerstoff hergestellt werden.

Granulate, z.B. Umhüllungs-, Imprägnierungs- und Homogengranulate können durch Bindung der herbiziden Mischung an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der herbiziden Mischung in den anwendungsfertigen Zubereitungen können in weiten Bereichen variiert werden. Im allgemeinen enthalten die Formulierungen etwa von 0,001 bis 98 Gew.-%, vorzugsweise 0,01 bis 95 Gew.-% der herbiziden Mischung.

Die Mischung des Adjuvant b) kann beispielsweise wie in Tabelle 2 formuliert werden:

**Tabelle 2:**

| Komponente/Mischung Nr.: | Nr. 1 | Nr. 2 | Nr. 3 | Nr. 4 | Nr. 5 | Nr. 6 |
|---|---|---|---|---|---|---|
| C-65 Methylester¹) | 37 | 30 | 10 | 35 | 5 | 37 |
| Klearfac® AA 270²⁾ | 7 | 15 | 15 | 2 | 7,5 | 22 |
| Lutensit® A-EP⁴⁾ | | | | 25 | | |
| Ölsäure | 5 | 35 | | 5 | | 5 |
| Plurafac® LF 700³⁾ | | | 75 | | 37,5 | |
| Silicone antifoam emulsion⁵⁾ | | | | 0,5 | | 0,5 |
| Solvesso® 150⁶⁾ | 51 | 20 | | 34,5 | 50 | 35,5 |

| | | | | | | |
|---|---|---|---|---|---|---|
| ¹⁾ 1:1 Gemische aus Methyloleat/Methylpalmitat (Witco) | | | | | | |
| ²⁾ Phosphat eines Fettsäurealkoholethoxylat/propoxylats (BASF Corporation) | | | | | | |
| ³⁾ Fettsäurealkoholethoxylat/propoxylat (BASF AG) | | | | | | |
| ⁴⁾ Phosphat eines Fettsäurealkoholethoxylat/propoxylats (BASF AG) | | | | | | |
| ⁵⁾ Silikon SKE Wacker | | | | | | |
| ⁶⁾ Alkylierte aromatische Kohlenwasserstoffe (Exxon) | | | | | | |

Zur Verbreiterung des Wirkungsspektrums und zur Erzielung synergistischer Effekte kann die herbizide Mischung mit zahlreichen Vertretern anderer herbizider oder wachstumsregulierender Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, (Het)-Aryloxyalkansäure und deren Derivate, Benzoesäure und deren Derivate, Benzothiadiazinone, 2-Aroyl-1,3-cyclohexandione, Hetaryl-Aryl-Ketone, Benzylisoxazolidinone, Meta-CF3-phenylderivate, Carbamate, Chinolincarbonsäure und deren Derivate Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- oder Heteroaryloxyphenoxypropionsäureester, Phenylessigsäure und deren Derivate, Phenylpropionsäure und deren Derivate, Pyrazole, Phenylpyrazole, Pyridazine, Pyridincarbonsäure und deren Derivate, Pyrimidylether, Sulfonylharnstoffe, Triazine, Triazinone, Triazolinone, Triazolcarboxamide, Uracile in Betracht.

Außerdem kann es von Nutzen sein, die herbizide Mischung allein oder in Kombination mit anderen herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden.

Die Aufwandmenge an herbizider Mischung betragen je nach Bekämpfungsziel, Jahreszeit, Zielpflanzen und Wachstumsstadium 0,01 bis 1,0, vorzugsweise 0,01 bis 0,5 kg/ha aktive Substanz, bezogen auf die reinen Komponenten der herbiziden Mischung.

### Anwendungsbeispiel

Die herbizide Wirkung der erfindungsgemäßen Mittel ließ sich durch Gewächshausversuche zeigen:

Als Kulturgefäße dienten Plastiktöpfe mit lehmigem Sand mit etwa 3,0 % Humus als Substrat. Die Samen der Testpflanzen wurden nach Arten getrennt eingesät.

Bei Vorauflaufbehandlung wurde die in Wasser suspendierte oder emulgierte herbizide Mischung direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die herbizide Mischung beeinträchtigt wurde.

Zum Zweck der Nachauflaufbehandlung wurden die Testpflanzen je nach Wuchsform erst bis zu einer Wuchshöhe von 3 bis 15 cm angezogen und dann mit der in Wasser suspendierten oder emulgierten herbiziden Mischung behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt.

Die Pflanzen wurden artenspezifisch bei Temperaturen von 10 - 25°C bzw. 20 - 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| Abkürzung | Lateinischer Name | Deutscher Name | Englischer Name |
|---|---|---|---|
| ABUTH | Abutilon theophrasti | Chinesischer Hanf | velvet leaf |
| | | | |
| SETVI | Setaria viridis | Grüne Borstenhirse | green foxtail |
| | | | |
| SETFA | Setaria faberi | große Borstenhirse | giant foxtail |

### Beispiel 1

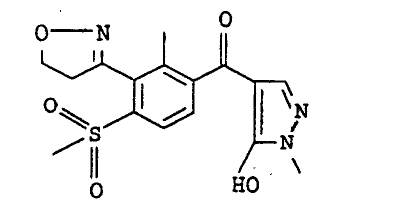

### Beispiel 2

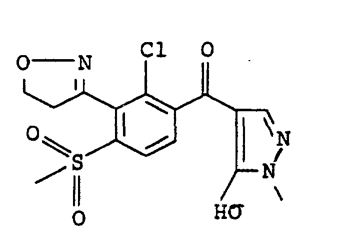

**Tabelle 3**

| herbizide Aktivität im Nachauflaufverfahren im Gewächshaus | | | |
|---|---|---|---|
| | | Phytotoxizität | |
| Wirkstoff | AWM kg/ha a.S. | SETFA | SETVI |
| BSP. 1 | 0.05 | 91.5 | 75 |
| BSP. 1 + Nr.6, Tabelle 2 | 0.05 + 0.6 | 95 | 95 |
| BSP. 1 + AG 6202 + Ensol 28 | 0.05 + 0.5 + 5.0 | 85 | 95 |

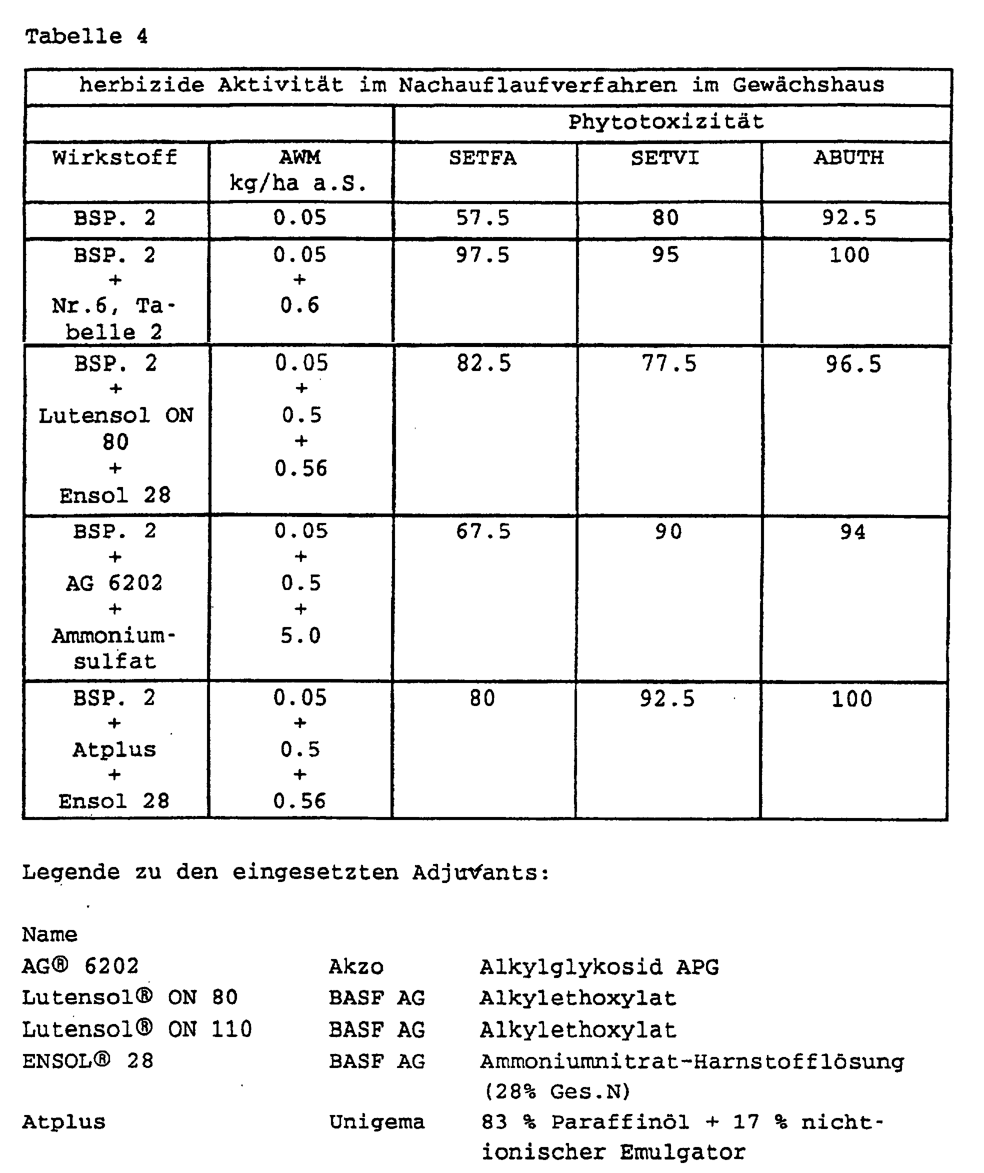

Aus den Werten der Tabelle 3 und 4 geht eindeutig die synergistische Wirkung der erfindungsgemäßen herbiziden Zweiermischung hervor im Vergleich zu den jeweiligen Dreiermischungen und gegenüber dem reinen Wirkstoff.

## Patentansprüche

1. Herbizide Mischung, enthaltend
a) 0,5 bis 90 Gew.-% eines 3-heterocyclyl-substituierten Benzoylderivates der Formel I 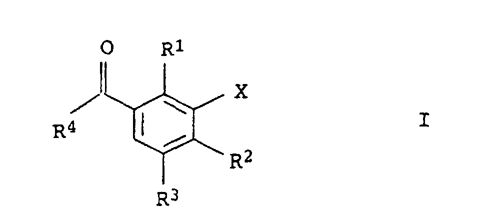 in der die Variablen folgende Bedeutung haben:
R¹ Chlor, Methyl;
R² Methylsufonyl;
R³ Wasserstoff;
X 4,5-Dihydroisoxazolyl;
R⁴ ein in 4-Stellung verknüpftes Pyrazol der Formel II 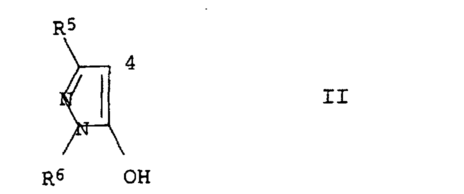 wobei
R⁵ Wasserstoff;
R⁶ Methyl;
bedeuten, oder deren umweltverträglichen Salze;
b) 10 bis 99,5 Gew.-% eines Adjuvants enthaltend
i) einen C₁-C₅-Alkylester einer 5 bis 22 Kohlenstoff-Atome enthaltenden Carbonsäure,
ii) eine C₁₀-C₂₀-Carbonsäure,
iii) einen partiellen Phosphorsäureester oder einen partiellen Schwefelsäureester eines monohydroxyfunktionellen Polyalkylethers und
iv) ggf. einen Alkylpolyoxyalkylenpolyether
in einer synergetisch wirksamen Menge.

2. Herbizide Mischung nach Anspruch 1, enthaltend 4-[2-Chlor-3-(4,5-dihydroisoxazol-3-yl)-4-methylsulfonyl-benzoyl]-1-methyl-5-hydroxy-1H-pyrazol.

3. Herbizide Mischung nach Anspruch 1, enthaltend 4-[2-Methyl-3-(4,5-dihydroisoxazol-3-yl)-4-methylsulfonylbenzoyl]-1-methyl-5-hydroxy-lH-pyrazol.

4. Verfahren zur Herstellung einer herbiziden Mischung gemäß einem der Ansprüche 1 bis 3, **dadurch gekennzeichnet, daß** man die Komponenten a) und b) der herbiziden Mischung miteinander mischt.

5. Verfahren zur Bekämpfung unerwünschten Pflanzenwuchses, **dadurch gekennzeichnet, daß** man eine herbizid wirksame Menge der Komponenten a) und b) der herbiziden Mischung gemäß einem der Ansprüche 1 bis 3 getrennt oder gemeinsam auf die Pflanzen oder deren Lebensraum einwirken läßt.

6. Verfahren zur Bekämpfung unerwünschten Pflanzenwuchses, **dadurch gekennzeichnet, daß** man eine herbizid wirksame Menge der Komponenten a) und b) der herbiziden Mischung gemäß einem der Ansprüche 1 bis 3 miteinander mischt und auf die Pflanzen oder deren Lebensraum einwirken läßt.

## Claims

1. A herbicidal mixture, comprising
a) 0.5 to 90% by weight of a 3-heterocyclyl-substituted benzoyl derivative of the formula I 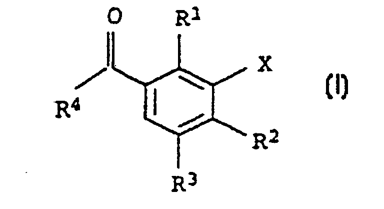 where:
R¹ is chlorine, methyl;
R² is methylsulfonyl;
R³ is hydrogen;
X is 4,5-dihydroisoxazolyl;
R⁴ is a pyrazole, attached in the 4-position, of the formula II 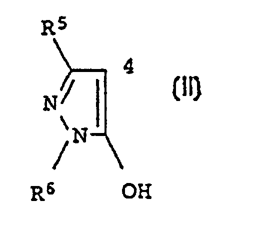 where
R⁵ is hydrogen;
R⁶ is methyl;
or an environmentally friendly salt thereof;
b) 10 to 99.5% by weight of an adjuvant, comprising
i) a C₁-C₅-alkyl ester of a carboxylic acid which contains 5 to 22 carbon atoms,
ii) a C₁₀-C₂₀-carboxylic acid,
iii) a partial phosphoric ester or a partial sulfuric ester of a monohydroxyfunctional polyalkyl ether and
iv) optionally an alkyl polyoxyalkylene polyether
in a synergistically effective amount.

2. A herbicidal mixture as claimed in claim 1, comprising
4-[2-chloro-3-(4,5-dihydroisoxazol-3-yl)-4-methylsulfonylbenzoyl]-1-methyl-5-hydroxy-lH-pyrazole.

3. A herbicidal mixture as claimed in claim 1, comprising
4-[2-methyl-3-(4,5-dihydroisoxazol-3-yl)-4-methylsulfonylbenzoyl]-1-methyl-5-hydroxy-1H-pyrazole.

4. A process for preparing a herbicidal mixture as claimed in any of claims 1 to 3, which comprises mixing the components a) and b) of the herbicidal mixture.

5. A method for controlling unwanted vegetation, which comprises allowing a herbicidally effective amount of the components a) and b) of the herbicidal mixture as claimed in any of claims 1 to 3 to act separately or together on the plants or their habitat.

6. A method for controlling unwanted vegetation, which comprises mixing a herbicidally effective amount of the components a) and b) of the herbicidal mixture as claimed in any of claims 1 to 3 and allowing the mixture to act on the plants or their habitat.

## Revendications

1. Mélange herbicide, contenant
a) 0,5 à 90% en poids d'un dérivé benzoyle à substitution 3-hétérocyclyle de formule I 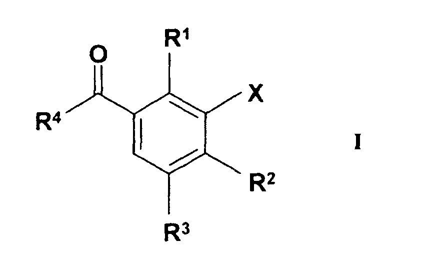 dans laquelle les variables prennent la signification suivante :
R¹ représente un atome de chlore, un groupe méthyle;
R² représente un groupe méthylsulfonyle;
R³ représente un atome d'hydrogène;
X représente un groupe 4,5-dihydroisoxazolyle;
R⁴ représente un groupe pyrazole lié dans la position 4 de formule II 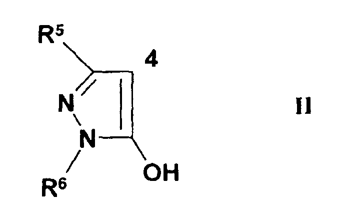 dans laquelle
R⁵ représente un atome d'hydrogène;
R⁶ représente un groupe méthyle;
ou ses sels non polluants;
b) 10 à 99,5% en poids d'un adjuvant contenant
i) un ester alkylique en C₁ à C₅ d'un acide carboxylique contenant 5 à 22 atomes de carbone,
ii) un acide carboxylique en C₁₀ à C₂₀,
iii) un ester phosphorique partiel ou un ester sulfurique partiel d'un polyalkyléther à fonction monohydroxy, et
iv) éventuellement un alkylpolyoxyalkylène-polyéther
en une quantité à effet synergique.

2. Mélange herbicide selon la revendication 1, contenant le 4-[2-chloro-3-(4,5-dihydroisoxazol-3-yl)-4-méthylsulfonyl-benzoyl]-1-méthyl-5-hydroxy-1 H-pyrazole.

3. Mélange herbicide selon la revendication 1, contenant le 4-[2-méthyl-3-(4,5-dihydroisoxazol-3-yl)-4-méthylsulfonyl-benzoyl]-1-méthyl-5-hydroxy-1 H-pyrazole.

4. Procédé de préparation d'un mélange herbicide selon l'une quelconque des revendications 1 à 3, **caractérisé en ce que** l'on mélange l'un à l'autre, les composants a) et b) du mélange herbicide.

5. Procédé de lutte contre une croissance végétale non souhaitée, **caractérisé en ce que** l'on laisse agir, séparément ou conjointement, une quantité efficace en tant qu'herbicide des composants a) et b) du mélange herbicide selon l'une quelconque des revendications 1 à 3, sur les plantes ou leur espace vital.

6. Procédé de lutte contre une croissance végétale non souhaitée, **caractérisé en ce que** l'on mélange ensemble une quantité efficace en tant qu'herbicide des composants a) et b) du mélange herbicide selon l'une quelconque des revendications 1 à 3, et qu'on la laisse agir sur les plantes ou leur espace vital.
